(19) Europäisches Patentamt
European Patent Office
Office européen des brevets

(11) EP 0 495 549 B1

(12) **EUROPEAN PATENT SPECIFICATION**

(45) Date of publication and mention of the grant of the patent:
**10.06.1998 Bulletin 1998/24**

(51) Int Cl.[6]: **C08G 61/12**

(21) Application number: **92200072.4**

(22) Date of filing: **13.01.1992**

(54) **Process for preparing polymers and moulding compounds based thereon**

Verfahren zur Herstellung von Polymeren und darauf basierende Formmasse

Procédé de préparation de polymères et masses à mouler à base de ces polymères

(84) Designated Contracting States:
**AT BE CH DE DK ES FR GB GR IT LI NL PT SE**

(30) Priority: **17.01.1991 NL 9100086**

(43) Date of publication of application:
**22.07.1992 Bulletin 1992/30**

(73) Proprietor: **DSM N.V.**
**6411 TE Heerlen (NL)**

(72) Inventors:
- **van Dijk, Hans Klaas**
  **Santa Barbara, California 93111 (US)**
- **Schellekens, Ronald Michael Alexander Maria**
  **NL-6241 DN Meerssen (NL)**

(74) Representative: **Jacobs, Monique S.N. et al**
**Octrooibureau DSM**
**Postbus 9**
**6160 MA Geleen (NL)**

(56) References cited:
**EP-A- 0 330 345**

- **CHEMICAL PATENTS INDEX, BASIC ABSTRACTS JOURNAL Derwent Publications Ltd., London, GB; AN 86-050864**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a process for preparing a polymer in which in situ polymerization of monomers takes place in the presence of a catalyst.

In situ polymerization of monomers in the presence of a catalyst is a process frequently used in the preparation of polymers. In this process, for instance, polymerizable monomers are added to a catalyst-containing solution. This process is often used in the preparation of an intrinsically conducting polymer.

A process for the in situ preparation of an intrinsically conducting polymer is known from the US patent specification US-A-4617353. In that patent specification a process is described in which a matrix polymer is dissolved in a liquid solvent. This solvent also contains a suitable catalyst. Subsequently, a monomer is added to this solution, upon which this monomer polymerizes to form an intrinsically conducting polymer.

Although it is in principle suited for the in situ preparation of a polymer, the process mentioned in US-A-4617353 encounters a number of practical problems. As the catalyst is present in the solution, the polymerization reaction commences immediately after the addition of the monomer. Thus a polymer is obtained instantaneously. In order subsequently to give form to the polymer, or to a blend thereof, a (number of) processing step(s) is required. This instantaneous polymerization reaction is not desirable if one or more further processing steps are necessary, because the prepared polymer, or a blend hereof with other polymers, is very hard to process or cannot be processed at all.

Intrinsically conducting polymers in particular such as, for instance, mentioned in US-A-4617353 are very hard to process or cannot be processed at all. Consequently, it is very difficult also to give form to moulding compounds containing intrinsically conducting polymers and thus to obtain products with intrinsically conducting properties.

The object of the invention is to provide a process for preparing a polymer in which in situ polymerization of monomers takes place in the presence of a catalyst, and which eliminates the said disadvantages.

This is achieved according to the invention in that the monomers are obtained by in situ activation of precursor monomers.

Using the process according to the invention, it is possible in simple processing steps to give form to moulding compounds and to manufacture products containing polymers that are hard to process. According to the invention, a premature polymerization is avoided, but polymerization only starts at the desired moment.

In a process according to the invention, the precursor monomers are given the desired form before their activation, upon which they can be activated in situ at any desired moment. After polymerization, the activated monomers form a polymer. By a precursor monomer is meant, according to the invention, a molecule not capable of polymerizing as such under the applied process conditions before the activation, even in the presence of a polymerization catalyst. However, after a simple conversion step, this molecule is converted into a polymerizable monomer. This conversion step may imply that a group blocking one or more reactive positions is removed. It is possible also for an electron-attracting group, which increases the oxidation potential of the molecule, so that polymerization is avoided, to be removed. In another mode of realization, an intramolecular reaction takes place such as, for instance, a retro-Diels-Alder reaction, to convert a precursor monomer into a polymerizable monomer.

The precursor monomer can be activated at the desired moment, for instance, by a thermal or photochemical treatment. Before this desired moment substantially no polymerization will take place under the process conditions, even when the precursor monomers are in the presence of a suitable catalyst. In the process according to the invention any precursor monomer can be used.

After activation of the precursor monomers, polymerization can take place. The polymerization is usually effected in the presence of a suitable catalyst. This catalyst is chosen from the group of generally known polymerization catalysts. Examples of such catalysts are compounds comprising a transition metal, particularly Fe, Co, Sn, Ru, Cu or Ni for example $FeCl_3$, $CuCl_2$ and $Cu(NO_3)_2$, but also Ziegler-Natta catalysts and complexes like $K_2Cr_2O_7$ and $(NH_4)_2S_2O_8$ are quite effective in some polymerization reactions. Particularly effective catalysts are iron trichloride and copper dichloride.

According to the invention any precursor monomer that becomes a polymerizable monomer after activation is in principle suited to be used. In the case in which an intrinsically conducting polymer is produced in situ, suitable precursor monomers are molecules having a structure according to formula (I):

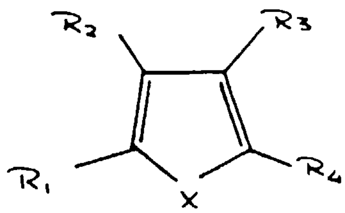

formula (I)

where

X is

$$-\underset{\substack{|\\ H}}{N}-,$$

-S- or -O-;

$R_1$ is hydrogen, -C(O)OH, -C(O)C(O)OH, -$SO_3$H, -C(O)H, -I or -Br;

$R_2$ is hydrogen, an alkyl group (with 1-10 carbon atoms),
-C(O)OH, or a halogen;

$R_3$ is hydrogen, an alkyl group (with 1-10 carbon atoms), -C(O)OH, or a halogen;

$R_4$ is hydrogen, -C(O)OH, -C(O)C(O)OH, -$SO_3$H, -C(O)H, -I or -Br;

on the understanding that $R_1$-$R_4$ are not all of them hydrogen simultaneously.

Preference is given to the use of pyrrole-2-carboxylic acid. The synthesis of this precursor monomer is described in J. Am. Pharm. Assoc. 45, 509 (1956).

All combinations of X, $R_1$, $R_2$, $R_3$ and $R_4$ are possible. The $R_1$ and/or $R_4$ groups can be eliminated thermally or photochemically while forming a pyrrole, thiophene or furan monomer substituted or not substituted at the $R_2$ and/or $R_3$ position. This precursor monomer is thus blocked and can then polymerize freely via the $R_1$ and $R_4$ positions. The $R_2$ and $R_3$ groups may be the same, or be different. Possibly $R_2$ and $R_3$ together may complete a cyclic structure. A suitable example is 3,4-(alkylene-vic-dioxy-)thiophene-2,5-dicarboxylic acid (see Tetrahedron 1967, Vol. 23, p. 2137-2441).

Other suitable precursor monomers which an intrinsically conducting polymer can be prepared with are precursor monomers having a structure according to formula (II):

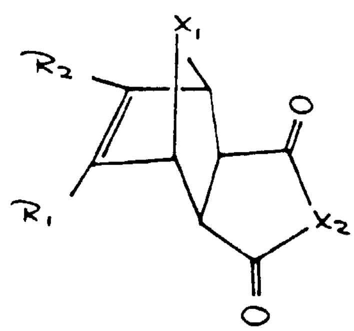

where

$X_1$ and $X_2$ are the same or different and are

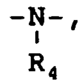

-S- or -O-;

$R_1$ and $R_2$ are the same or different and are hydrogen or an alkyl group with 1-10 carbon atoms;

$R_4$ is hydrogen, or an alkyl, aryl or alkoxy group.

The precursor monomers according to formula (II) can be synthesized, for instance, as described in J. Chem. Soc. Perkin Trans. I (1985), pp. 1277-1284. Another suitable precursor monomer is 4-amino benzoic acid (see P. Ruelle, 7. Chem. Soc. Perkin trans. II, 1953 (1986). Also 3,4-disubstituted thiophenes (see e.g. US-A-4,987,042) can be used.

The process according to the invention is not limited to the simultaneous use of precursor monomers of one kind. Combinations of all sorts of precursor monomers are possible. Optionally, precursor oligomers can be used also.

In a suitable mode of realizing the process according to the invention, first a solution is made of a precursor monomer and a catalyst. In a few cases the precursor monomer itself can be used as solvent for the catalyst. Optionally, other components are added to this solution. These components may, for instance, be a liquid resin, an emulsion, a paint and/or pigments. When the resulting solution, or the resulting mixture, has been given its desired form, for instance by smearing it onto a surface, activation of the precursor monomers can take place. The desired form may consist in, for instance, a layer applied onto a surface.

In the formation of an intrinsically conducting polymer, an eminently suitable application for a solution of a precursor monomer and a catalyst is the use of this solution in the preparation of a conducting coating or paint. To this end the solution of the precursor monomer with catalyst is optionally mixed with a liquid resin or paint. This liquid resin or paint can be added as matrix polymer in order to enable the mixture to be processed or to be given its desired form. The mixture obtained is subsequently applied onto a surface to be treated, upon which, for instance, a thermal or photochemcial treatment takes place. This causes the precursor monomers to be activated, after which the activated monomers polymerize to form an intrinsically conducting polymer, while the curing reaction of the liquid resin or of the paint optionally proceeds simultaneously.

It has been found that by using the aforementioned mode of realization it is possible, in a simple manner, to obtain a coating or a paint that can be stored for quite a length of time without activation of the precursor monomers, and which can easily be provided, after its application onto a surface to be treated, with the desired intrinsically conducting properties.

The process according to the invention is also highly suited for the preparation of moulding compounds, in which process the moulding compound can easily be given any desired form. This is achieved according to the invention in that first a mixture or a solution containing precursor monomers and catalyst is given a desired form before the monomers forming a polymer after polymerization are obtained by in situ activation of the precursor monomers. Optionally, the above mixture or the above solution also contains a matrix polymer or the monomeric unit thereof.

A suitable mode of realizing the process according to the invention consists in dissolving a precursor monomer and - optionally - a catalyst in a suitable solvent. For this mode of realization, therefore, a solvent is required in which the precursor monomer, as well as - optionally - the catalyst, dissolves. Such solvents are often chosen from the group of water, benzene, acetone, ether, ethanol, $CHCl_3$, $CH_2Cl_2$, dioxane, THF or combinations of these. In a few cases the precursor monomer itself can be used as solvent for the catalyst.

To this solution a matrix polymer is added. Depending on the conditions, the matrix polymer may then dissolve, but it is possible also for the matrix polymer to continue to be present in non-dissolved form. The solubility of the matrix polymer depends to a high degree on the temperature of the solvent and the concentration of the matrix polymer.

If the added matrix polymer does not dissolve (completely) in the chosen solution, a matrix polymer is formed impregnated with a solution containing precursor monomer and - optionally - catalyst. This mode of realization, therefore, is eminently suited for the production of, preferably porous, moulding compounds such as, for instance, granules, fibres or films, which contain a mixture of matrix polymer, precursor monomer and optionally catalyst. These porous moulding compounds can be stored, if so desired, till the moment at which they are used for the manufacture of a desired product. The precursor monomers can subsequently be activated at any desired moment by means of, for instance, a thermal or photochemical treatment, upon which a product is obtained with the desired properties. The invention therefore also relates to such moulding compounds.

If the matrix polymer dissolves completely in the chosen solution containing precursor monomer and - optionally - catalyst, a solution is formed. If a solution is formed having viscoelastic properties, this mode of realization is highly suited for the continuous preparation of fibres and films. To this end it is important that the solution obtained should be capable of being properly spun. This spinnability is determined to a high degree by the concentration of the matrix polymer to be added and by the amount of solvent. The spinnability of a solution can be determined easily by a person

skilled in the art. This procedure is described in Tammann G., Tampke R., Z. Anorg. Allg. Chemie, Bd. 162 (1927) pp. 1-16. The mechanical properties of fibres and films can be improved considerably by means of afterstretching.

The above mode of realizing the process according to the invention is suited also for use in combination with so-called Reaction Injection Moulding (RIM) techniques. This special mode of realizing the process according to the invention is characterized in that a mixture of a precursor monomer, a catalyst and optionally, for instance, a low viscosity resin is introduced into a preheated mould. The temperature of this mould is such that the precursor monomers are activated, upon which polymerization occurs. Optionally, instead of a low viscosity resin, a liquid monomer can be used, which, by polymerization - simultaneously with the polymerization of the activated precursor monomers into a polymer - forms a matrix polymer. The heated mould may be of any desired form. Suitable resins that can be used in this special mode of realization are, for instance, epoxy resins, polyester resins, melamine-urea-formaldehyde resins and BMI resins. When suitable precursor monomers are used, this mode of realization is excellently suited for preparing intrinsically conducting moulding compounds.

Another suitable mode of realizing the process according to the invention is characterized in that the precursor monomer and the catalyst are mixed with a wholly or partly molten thermoplast. This is achieved in that the precursor monomer and the catalyst are fed to an intimate mixer, which already contains this wholly or partly molten thermoplast. This mixture is subsequently given a desired form, for instance by injection moulding. The temperature of this thermoplast is such that no complete thermal activation and conversion of the precursor monomer into a polymerizable monomer takes place until after the moulding. Under the influence of the catalyst, polymerization takes place, optionally during simultaneous devolatilization of the mixture for the removal of volatile components. It will be clear that it is very important for the polymerization of the activated precursor monomers to take place to a large extent after the mixture has been given its desired form. Therefore, in order to cause the polymerization to proceed with the desired result, it is of paramount importance that the process temperature and the throughput of the mixture in the intimate mixer should be accurately controlled.

If suitable precursor monomers are used, an intrinsically conducting moulding compound comprising an intrinsically conducting polymer and a thermoplast can be obtained in one, if so desired continuous, process step using this mode of realizing the process according to the invention.

It has been found that with the above-mentioned modes of realizing the process according to the invention moulding compounds can be obtained in a simple manner. If suitable precursor monomers are used, moulding compounds can be obtained with good conducting properties. Depending on the precursor monomer used, the conductivity of the intrinsically conducting moulding compound can be brought to the desired level by means of an (oxidative or reductive) doping step in which the known doping techniques and reactants can be used. These are mentioned, for instance, in the 'Handbook of Conducting Polymers' (T.A. Skotheim, Marcel Dekker Inc., New York, USA (1986)).

By conducting properties of the desired level is usually meant a minimum conductivity of 10-5 S/cm, measured according to the so-called four-probe technique. This method is described in brief in EP-A314311. A more detailed description can be found in H.H. Wieder, Laboratory Notes on Electrical and Galvanomagnetic Measurements, Elsevier, New York, 1979. With this method the specific conductivity is measured:

$$\sigma = (L/A) * (1/R),$$

where

$\sigma$ = specific conductivity [S/cm],
L = distance between the two innermost electrodes [cm],
R = resistance [Ohm],
A = cross sectional area [$cm^2$].

The moulding compounds according to the invention can be obtained, for instance, by extrusion of the mixture or the solution of matrix polymer, precursor monomer and catalyst. The moulding compound can subsequently be heated or irradiated, so that the precursor monomers are activated and polymerization occurs while forming a product. Examples of products to be obtained are fibres, films and all kinds of injection-moulded articles. The injection-moulded articles can very well be made from moulding compounds according to the invention. Examples of such moulding compounds are granules and powder. These moulding compounds are preferably granules.

The moulding compounds can be heated or irradiated immediately after their formation, so that deblocking of the precursor monomers takes place, but they can also be left to wait until any desired moment. This moment will generally be chosen after the final formation.

Any polymer may in principle be chosen as the matrix polymer present in the various modes of realization. This matrix polymer is necessary in order to make it possible for an intrinsically conducting moulding compound to be formed.

Thermoplastic polymers in particular are eminently suited to serve as matrix polymer. Suitable matrix polymers are, for instance, PPTA, polyethylene, ultra high molecular weight polyethylene (UHMWPE), polyvinyl alcohol, polyvinyl chloride, polyvinyl acetate, polystyrene, polyethyleneoxide, polyvinylidene chloride and the like. In a few cases it is possible, instead of the matrix polymer, to add the monomeric units thereof.

The desired weight ratio between the amount of matrix polymer and the amount of precursor monomer is a result of the optimization between the various properties desired. In the case of intrinsically conducting moulding compounds, an optimization is aimed at between the desired conducting properties on the one side and the desired mechanical properties on the other. Higher concentrations of matrix polymer have an adverse effect on the conductivity in the final moulding compound, while lower concentrations of matrix polymer may have an adverse effect on the desired mechanical properties. The optimum concentration of the matrix polymer is determined to a considerable degree by the molecular weight and the degree of branching of the matrix polymer.

By applying the process according to the invention a moulding compound of any desired form can be obtained in a simple manner. By applying the process according to the invention it is possible to postpone the polymerization into a hard-to-process polymer until the final desired form has been obtained. Thus it is very well possible to make moulding compounds without any adverse effects on the properties of the final moulding compounds obtained.

After the production of the moulding compound, any residual catalyst material and other low molecular weight components can be removed by extraction and/or evaporation. These processes are generally known in the art.

In the preparation of moulding compounds according to the invention, optionally up to 60% (wt) fillers and/or antioxidants can yet be added, either by admixture in the solution or in the mixture obtained, or by admixture in the wholly or partly molten thermoplast before addition of the solution. Examples of fillers to be added are talcum, fibres, pigments, kaolin, wollastonite and glass.

Products obtained by applying the process according to the invention can be used in the most widely different fields. Exponents of these are the fields of coatings and EMI shielding attributes. Other suitable applications are, for instance, conducting films.

The invention is elucidated by means of the following examples without being limited thereto.

Example I:

In 7 ml tetrahydrofuran (THF), 250 mg pyrrole-2-carboxylic acid and 700 mg iron trichloride were dissolved at a temperature of 20°C. A porous PE film (porosity 0.85; 2.0 x 3.0 $cm^2$) was impregnated in this solution for 60 seconds. After that, the film was taken from the bath and heated in an oven for 5 minutes to 100°C. The resulting black film was subsequently subjected to extraction using acetone. After extraction and drying a specific conductivity (a) of 1.1 S/cm was measured.

Comparative experiment:

In 7 ml tetrahydrofuran (THF) 700 mg iron trichloride was dissolved at a temperature of 20°C. Subsequently, 250 mg pyrrole was added, upon which a black powder was formed at once. A porous PE film (porosity 0.85; 2.0 x 3.0 $cm^2$) was impregnated in this solution for 60 seconds. After that, the film was taken from the bath and heated in an oven for 5 minutes to 100°C. The resulting film was subsequently subjected to extraction using acetone. After extraction and drying a specific conductivity ($\sigma$) of 0.2 S/cm was measured.

Example II:

In 1 ml tetrahydrofuran (THF) 500 mg thiophene-3-methyl-2-carboxylic acid was dissolved at a temperature of 20°C. To this solution a solution of 1.2 grammes $FeCl_3$ in 3 ml methanol was added. A porous PE film (with a porosity ($\varepsilon$) of 0.85) was subsequently impregnated for 30 seconds with the solution obtained, upon which the impregnated film was heated for 5 minutes at 120°C. After extraction and drying a poly(4-methyl-thiophene)/PE film was obtained with a specific conductivity of 0.5 S/cm.

Example III:

500 mg 4-methyl-thiophene-5-carboxylic acid and 1140 mg $FeCl_3$ were dissolved in a mixture of 3 ml methanol and 1 ml THF. A porous PE film (with a porosity ($\varepsilon$) of 0.85) was impregnated with this solution for 30 seconds. The film thus obtained was heated for 5 minutes to a temperature of 120°C. The film was subsequently doped for 5 minutes using a solution of 500 mg $NOSbF_6$ in 30 ml $CH_3CN$. The specific conductivity of the film obtained was 4.3 S/cm.

Example IV:

Example IV was repeated, except that, after heating to 120°C, the porous PE film was impregnated once again for 60 seconds. The film was subsequently doped for 5 minutes using a solution of 500 mg $NOSbF_6$ in 30 ml $CH_3CN$. The specific conductivity of the film obtained was 10.4 S/cm.

Example V:

In 10 ml methanol 250 mg pyrrole-2-carboxylic acid and 700 mg $FeCl_3$ were dissolved at a temperature of 20°C. Subsequently, 600 mg polyvinyl chloride powder (PVC powder, $M_w$ = 70000 g/mole) was subsequently impregnated with this solution for 5 minutes. After filtration, the powder was air-dried for one night. Subsequently, from the impregnated powder a film was moulded for 10 minutes at a temperature of 160°C and a pressure of 60 bar. The specific conductivity of the resulting black film was 1.1 $10^{-5}$ S/cm.

Example VI:

In 25 ml tetrahydrofuran (THF) were dissolved 1 gramme pyrrole-2-carboxylic acid, 2.9 grammes anhydrous $FeCl_3$ and 3.3 grammes polyvinyl acetate (PVAc) at a temperature of 20°C. Using a doctor blade a 100-µm-thick

layer of the solution obtained was spread out on a polyethylene terephthalate (PET) film. The film, with the yellowish solution on it, was subsequently heated in an oven for 3 minutes at a temperature of 95°C. During this heating process a discolouration of the solution took place from yellow to black. After extraction with acetone and drying, a specific conductivity of 4.0 $10^{-3}$ S/cm was measured.

Example VII:

In 3.5 ml THF, 250 mg pyrrole-2-carboxylic acid and 700 mg $FeCl_3$ were dissolved. To this solution 400 mg alkyd resin was added (high fatty acid content, viscosity 50 poise). The mixture obtained was applied in the form of a coating on a polyethylene terephthalate (PET) film. After the resulting coated film had been heated for 5 minutes to 100°C, it was subjected to extraction using water and acetone. The specific conductivity of the coating was 0.4 S/cm.

Example VIII:

In a mixture of 1.5 ml THF and 1.5 ml methanol, 250 mg pyrrole-2-carboxylic acid and 700 mg $FeCl_3$ were dissolved. Subsequently, a teflon film (2.0 x 3.0 $cm^2$, GORE-TEX$^R$) with a thickness of 35 pm was impregnated for 30 seconds using this solution. The impregnated film was subsequently heated for 5 minutes at 100°C. After extraction with acetone the specific conductivity of the resulting polypyrrole/teflon film was measured. It was 0.6 S/cm.

Example IX:

Example IX was repeated, except that a micro-porous (MD)PE film (2.0 x 3.0 $cm^2$) was impregnated (this film is described in EP-0184392). The thickness of this film was 30 pm. The impregnated film was heated for 3 minutes at 100°C. After extraction with acetone, the conductivity measured on the resulting film was 0.8 S/cm.

The examples show that by applying the process according to the invention moulding compounds of a desired form can be obtained in a simple manner, while also the properties of a moulding compound thus obtained are very good.

**Claims**

**1.** Process for preparing a polymer in which in situ polymerization of monomers takes place in the presence of a catalyst, characterized in that first a mixture or a solution containing precursor monomers and catalyst is given a final desired form for the polymer before the monomers are obtained by in situ activation of precursor monomers, which precursor have a structure according to formula (I):

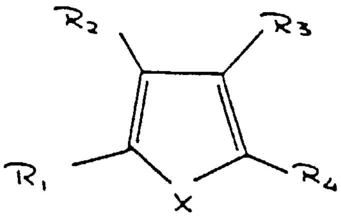

formula (I)

where

X is

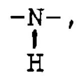

-S- or -O-;
$R_1$ is hydrogen, -C(O)OH, -C(O)C(O)OH, $-SO_3H$ or, -C(O)H,
$R_2$ is hydrogen, an alkyl group (with 1-10 carbon atoms), -C(O)OH or a halogen;
$R_3$ is hydrogen, an alkyl group (with 1-10 carbon atoms), -C(O)OH or a halogen;
$R_4$ is hydrogen, -C(O)OH, -C(O)C(O)OH, $-SO_3H$, or -C(O)H; on the understanding that $R_1$ and $R_4$ are not both of them hydrogen simultaneously.

**2.** Process according to claim 1, characterized in that the mixture also contains a matrix polymer, or the monomeric unit thereof.

**3.** Process according to claim 2, characterized in that the matrix polymer is a low-viscosity resin.

**4.** Process according to claim 2 or 3, characterized in that the mixture or the solution is introduced into a preheated mould.

**5.** Process according to claim 4, characterized in that the matrix polymer is a liquid resin, a paint or an emulsion.

**6.** Process according to claim 4, characterized in that the matrix polymer is a thermoplastic polymer.

**7.** Process according to claim 6, characterized in that the mixture is obtained by mixing a solution containing precursor monomer and catalyst with a wholly or partly molten thermoplast.

**8.** Process according to any one of claims 1-7, characterized in that the catalyst comprises a transition metal and a halogen.

**9.** Process according to claim 8, characterized in that the catalyst is iron trichloride or copper dichloride.

**10.** Process according to any one of claims 1-9, characterized in that, after activation and polymerization, the precursor monomers form an intrinsically conducting polymer.

**11.** Process according to claim 10, characterized in that the precursor monomer is pyrrole-2-carboxylic acid.

**12.** Process according to any one of claims 1-11, characterized in that the precursor monomers are deblocked by means of a thermal or a photochemical treatment.

**13.** Moulding compounds containing precursor monomers, a matrix polymer and optionally a catalyst, wherein the precursor monomers form an intrinsically conducting polymer and in that the precursor monomers have a structure according to formula (I):

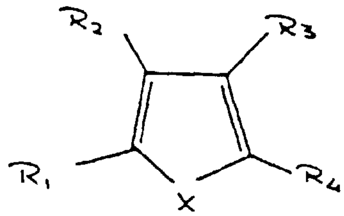

formula (I)

where

X is

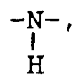

-S- or -O-;
$R_1$ is hydrogen, -C(O)OH, -C(O)C(O)OH, -$SO_3$H or, -C(O)H;
$R_2$ is hydrogen, an alkyl group (with 1-10 carbon atoms), -C(O)OH or a halogen;
$R_3$ is hydrogen, an alkyl group (with 1-10 carbon atoms), -C(O)OH or a halogen;
$R_4$ is hydrogen, -C(O)OH, -C(O)C(O)OH, -$SO_3$H or, -C(O)H; on the understanding that $R_1$ and $R_4$ are not both of them hydrogen simultaneously.

## Patentansprüche

1. Verfahren zur Herstellung eines Polymers, bei welchem eine in situ-Polymerisation von Monomeren in Anwesenheit eines Katalysators stattfindet, dadurch gekennzeichnet, daß zuerst einer Mischung oder einer Lösung, die Vorläufer-Monomere und einen Katalysator enthält, eine gewünschte Endform für das Polymer gegeben wird, bevor die Monomere durch in situ-Aktivierung der Vorläufer-Monomere erhalten werden, welcher Vorläufer eine Struktur der Formel (I) aufweist:

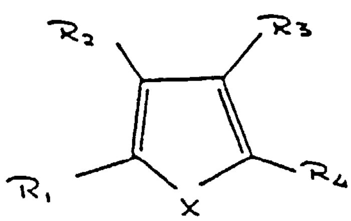

(Formel (I)),

worin

X

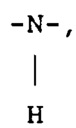

-S- oder -O- ist;
$R_1$ Wasserstoff, -C(O)OH, -C(O)C(O)OH, -$SO_3$H oder -C(O)H bedeutet,
$R_2$ Wasserstoff, eine Alkyl-Gruppe (mit 1 bis 10 Kohlenstoffatomen), -C(O)OH oder ein Halogen darstellt;
$R_3$ Wasserstoff, eine Alkyl-Gruppe (mit 1 bis 10 Kohlenstoffatomen), -C(O)OH oder ein Halogen ist;
$R_4$ Wasserstoff, -C(O)OH, -C(O)C(O)OH, -$SO_3$H oder -C(O)H bedeutet;

mit der Maßgabe, daß $R_1$ und $R_4$ nicht beide gleichzeitig Wasserstoff darstellen.

**2.** Verfahren nach Anspruch 1, dadurch gekennzeichnet, daß die Mischung auch ein Matrix-Polymer, oder die Monomer-Einheit hievon, enthält.

**3.** Verfahren nach Anspruch 2, dadurch gekennzeichnet, daß das Matrix-Polymer ein niederviskoses Harz ist.

**4.** Verfahren nach Anspruch 2 oder 3, dadurch gekennzeichnet, daß die Mischung oder die Lösung in eine vorgeheizte Form eingebracht wird.

**5.** Verfahren nach Anspruch 4, dadurch gekennzeichnet, daß das Matrix-Polymer ein Flüssigharz, eine Farbe oder eine Emulsion ist.

**6.** Verfahren nach Anspruch 4, dadurch gekennzeichnet, daß das Matrix-Polymer ein thermoplastisches Polymer ist.

**7.** Verfahren nach Anspruch 6, dadurch gekennzeichnet, daß die Mischung durch Mischen einer Lösung erhalten wird, die ein Vorläufer-Monomer und einen Katalysator mit einem vollständig oder teilweise geschmolzenen Thermoplast enthält.

**8.** Verfahren nach einem der Ansprüche 1 bis 7, dadurch gekennzeichnet, daß der Katalysator ein Übergangsmetall und ein Halogen umfaßt.

**9.** Verfahren nach Anspruch 8, dadurch gekennzeichnet, daß der Katalysator Eisentrichlorid oder Kupferdichlorid ist.

**10.** Verfahren nach einem der Ansprüche 1 bis 9, dadurch gekennzeichnet, daß, nach Aktivierung und Polymerisation, die Vorläufer-Monomere ein eigenleitendes Polymer bilden.

**11.** Verfahren nach Anspruch 10, dadurch gekennzeichnet, daß das Vorläufer-Monomer Pyrrol-2-carbonsäure ist.

**12.** Verfahren nach einem der Ansprüche 1 bis 11, dadurch gekennzeichnet, daß die Vorläufer-Monomere durch eine thermische oder eine photochemische Behandlung entblockt werden.

**13.** Formverbindungen, welche Vorläufer-Monomere, ein Matrix-Polymer und gegebenenfalls einen Katalysator enthalten, wobei die Vorläufer-Monomere ein eigenleitendes Polymer bilden, und wobei die Vorläufer-Monomere eine Struktur der Formel (I) aufweisen:

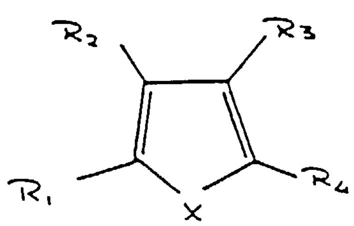

(Formel (I)),

worin

X

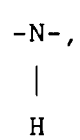

-S- oder -O- ist;

$R_1$ Wasserstoff, -C(O)OH, -C(O)C(O)OH, $-SO_3H$ oder -C(O)H bedeutet,
$R_2$ Wasserstoff, eine Alkyl-Gruppe (mit 1 bis 10 Kohlenstoffatomen), -C(O)OH oder ein Halogen darstellt;
$R_3$ Wasserstoff, eine Alkyl-Gruppe (mit 1 bis 10 Kohlenstoffatomen), -C(O)OH oder ein Halogen ist;
$R_4$ Wasserstoff, -C(O)OH, -C(O)C(O)OH, $-SO_3H$ oder -C(O)H bedeutet;

mit der Maßgabe, daß $R_1$ und $R_4$ nicht beide gleichzeitig Wasserstoff darstellen.

**Revendications**

1. Procédé de préparation d'un polymère dans lequel a lieu une polymérisation in situ des monomères en présence d'un catalyseur, caractérisé en ce qu'on donne d'abord une forme finale souhaitée pour le polymère à un mélange ou une solution contenant des monomères précurseurs et un catalyseur avant obtention des monomères par activation in situ des monomères précurseurs, ce précurseur ayant une structure selon la formule (I) :

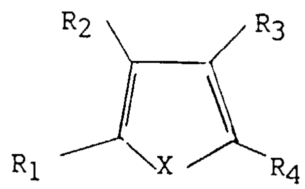

formule (I)

dans laquelle

X est

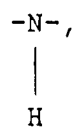

-S- ou -O- ;
$R_1$ est l'hydrogène, -C(O)OH, -C(O)C(O)OH, $-SO_3H$, ou -C(O)H,
$R_2$ est l'hydrogène, un groupe alkyle (avec 1 à 10 atomes de carbone), -C(O)OH ou un halogène ;
$R_3$ est l'hydrogène, un groupe alkyle (avec 1 à 10 atomes de carbone), -C(O)OH ou un halogène ;
$R_4$ est l'hydrogène, -C(O)OH, -C(O)C(O)OH, $-SO_3H$, ou -C(O)H; à la condition que $R_1$ et $R_4$ ne soient pas tous les deux l'hydrogène simultanément.

2. Procédé selon la revendication 1, caractérisé en ce que le mélange contient également un polymère matriciel, ou son motif monomère.

3. Procédé selon la revendication 2, caractérisé en ce que le polymère matriciel est une résine à faible viscosité.

4. Procédé selon la revendication 2 ou 3, caractérisé en ce qu'on introduit le mélange ou la solution dans un moule préchauffé.

5. Procédé selon la revendication 4, caractérisé en ce que le polymère matriciel est une résine liquide, une peinture ou une émulsion.

6. Procédé selon la revendication 4, caractérisé en ce que le polymère matriciel est un polymère thermoplastique.

7. Procédé selon la revendication 6, caractérisé en ce qu'on obtient le mélange en mélangeant une solution contenant

un monomère précurseur et un catalyseur avec un thermoplaste entièrement ou partiellement fondu.

**8.** Procédé selon l'une quelconque des revendications 1 à 7, caractérisé en ce que le catalyseur comprend un métal de transition et un halogène.

**9.** Procédé selon la revendication 8, caractérisé en ce que le catalyseur est le trichlorure de fer ou le dichlorure de cuivre.

**10.** Procédé selon l'une quelconque des revendications 1 à 9, caractérisé en ce qu'après activation et polymérisation, les monomères précurseurs forment un polymère à conduction intrinsèque.

**11.** Procédé selon la revendication 10, caractérisé en ce que le monomère précurseur est l'acide pyrrole-2-carboxylique.

**12.** Procédé selon l'une quelconque des revendications 1 à 11, caractérisé en ce que les monomères précurseurs sont débloqués par un traitement thermique ou photochimique.

**13.** Composés de moulage contenant des monomères précurseurs, un polymère matriciel et facultativement un catalyseur, dans lesquels les monomères précurseurs forment un polymère à conduction intrinsèque et en ce que les monomères précurseurs ont une structure selon la formule (I) :

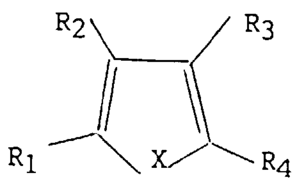

formule (I)

dans laquelle

X est

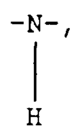

-S- ou -O- ;
$R_1$ est l'hydrogène, -C(O)OH, -C(O)C(O)OH, -$SO_3$H ou-C(O)H,
$R_2$ est l'hydrogène, un groupe alkyle (avec 1 à 10 atomes de carbone), -C(O)OH ou un halogène ;
$R_3$ est l'hydrogène, un groupe alkyle (avec 1 à 10 atomes de carbone), -C(O)OH ou un halogène ;
$R_4$ est l'hydrogène, -C(O)OH, -C(O)C(O)OH, -$SO_3$H ou-C(O)H, à la condition que $R_1$ et $R_4$ ne soient pas tous les deux l'hydrogène simultanément.